# EUROPÄISCHE PATENTSCHRIFT

(11) **EP 0 535 302 B1**
(45) Veröffentlichungstag und Bekanntmachung des Hinweises auf die Patenterteilung: **10.08.1994**
(21) Anmeldenummer: 92108314.3
(22) Anmeldetag: 16.05.1992
(51) Int. Cl.: B24B 5/10, B24B 7/10, B29D 29/10

(54) **Vorrichtung zur Herstellung von Antriebsriemen**
Device for the production of driving belts
Dispositif pour la fabrication de courroies de transmission

(30) Priorität: 28.09.1991 DE 4132385
(43) Veröffentlichungstag der Anmeldung: 07.04.1993
(73) Patentinhaber: HERMANN BERSTORFF Maschinenbau GmbH, D-30627 Hannover (Kleefeld) (DE)
(72) Erfinder: Borchardt, Horst, Dipl.-Ing., W-3167 Burgdorf (DE)

(56) Entgegenhaltungen:
- DE-A- 2 358 964
- DE-B- 1 043 622
- GB-A- 1 200 380
- PATENT ABSTRACTS OF JAPAN vol. 10, no. 281 (M-520)25. September 1986 & JP-A-61 100 375 (NUCLEAR FUEL CO LTD) 19 Mai 1986
- PATENT ABSTRACTS OF JAPAN vol. 12, no. 131 (M-688)22. April 1988 & JP-A-62 253 436 (MITSUBOSHI BELTING) 5 November 1987

## Beschreibung

Die Erfindung betrifft eine Vorrichtung zur Herstellung von Antriebsriemen gemäß dem Oberbegriff des Anspruchs 1.

Wie beispielsweise aus der DE-AS 10 43 622 seit langem bekannt ist, lassen sich Antriebsriemen in vorteilhafter Weise aus einem armierten Gummiwickel herausschneiden, der auf einem rotierenden Dorn aufgespannt ist. Dazu wird der Gummiwickel mit dem Dorn in Rotation versetzt und mit Hilfe eines oder mehrerer Trennmesser unter vorgewähltem Flankenwinkel ein endloser Riemen aus dem Wickel herausgeschnitten.

Nachteilig an diesem Verfahren ist, daß wegen der schräg zur Oberfläche des Wickels verlaufenden Trennschnitte ein exakter Flankenschnitt nur mit vergleichsweise aufwendigen Lagerungs- und Führungseinrichtungen für die Schneidmesser möglich ist. Außerdem können mit diesem Verfahren nur einfach strukturierte Antriebsriemen hergestellt werden, also etwa rechteckiger oder V-förmiger Geometrie.

Zudem ist aus der DE-AS 23 58 964 ein Verfahren und eine Vorrichtung bekannt, mit denen aus einem armierten und vulkanisierten Gummiwickel auch Mehrelementkeilriemen (Poly-V-Riemen) unter Vermeidung der oben genannten Nachteile herstellbar sind. Verfahrensgemäß wird der Gummiwickel dazu auf einen Dorn aufgespannt und mit diesem in Rotation versetzt. Ein kombiniertes Form-, Profil- und Trennschleifwerkzeug wird dann von außen gegen die Wickeloberfläche geführt und sorgt so in mehreren Schleifschritten zunächst für eine plane Wickeloberfläche und schließlich für einen profilgebenden Trennschliff.

Zwar lassen sich mit diesem Verfahren Antriebsriemen großer Geometriegenauigkeit über den Riemenumfang sowie Mehrelementkeilriemen herstellen, nachteilig ist aber, daß dies mit einer nur geringen Fertigungsgeschwindigkeit geschehen kann. Wegen der schlechten Wärmeleitfähigkeit des Gummis ist dieses Herstellungsverfahren sinnvoll nur mit einer Kühlung des Schleifgutes nutzbar, wenn einerseits ein Verbrennen des Gummis verhindert werden und andererseits eine akzeptable Fertigungsgeschwindigkeit darstellbar sein soll. In der Praxis kommt dieses Verfahren daher grundsätzlich als Naßschleifverfahren zur Anwendung, bei dem Wasser als Kühlmittel zwischen den Gummiwickel und das Schleifwerkzeug gespritzt wird. Die Schleifleistung wird dabei allerdings zum einen von der maximal zulässigen Schleifguttemperatur (80° bis 100° C) und zum anderen von der Kühlwassermenge begrenzt, die ohne ein Aufschwimmen des Werkzeuges (Aquaplaning) in die Schleifnut einspritzbar ist.

Nachteilig ist zudem, daß unter Umweltschutzgesichtspunkten ein Kühlwasserkreislauf mit entsprechendem Schleifabriebabscheider notwendig ist, denn mit Abrieb belastetes Kühlwasser führt sehr schnell zu einer Verringerung der Schleifleistung sowie zu Verbrennungen am Schleifgut.

Die Aufgabe der Erfindung war es daher, eine Vorrichtung vorzustellen, mit der Antriebsriemen als Einfach- oder Mehrelementkeilriemen mit guter Geometriegenauigkeit bei erhöhter Fertigungsgeschwindigkeit herstellbar sind. Außerdem sollte eine umweltverträgliche und weniger aufwendige Kühlung gefunden werden.

Die Lösung dieser Aufgabe ergibt sich aus den Merkmalen des Hauptanspruchs. Vorteilhafte Weiterbildungen und Ausgestaltungen der Erfindung sind den Unteransprüchen entnehmbar.

Mit der erfindungsgemäßen Vorrichtung läßt sich die Fertigungsdauer für einen Mehrelementkeilriemen im Vergleich zu bisher bekannten Vorrichtungen um ca. 70 % verringern. Versuche haben gezeigt, daß beispielsweise ein Mehrelementriemen mit etwa 1,2 m Umfangslänge in nur einem Umlauf und in ca. 3 Sekunden fertig geschliffen werden kann. Dabei liegt die Temperatur des Antriebsriemens und des Schleifwerkzeuges unter 60° C, so daß eine vorteilhaft geringe thermische Belastung des Antriebsriemenmaterials festzustellen ist.

Von entscheidender Bedeutung für diese Fertigungsergebnisse ist, daß der Antriebsriemen im trockenen Zustand mit einem aktiv gekühlten Schleifwerkzeug bearbeitet wird. Dadurch kann gegenüber den bekannten Naßschleifvorrichtungen die Zustellung und die Umfangsgeschwindigkeit des Schleifwerkzeuges stark vergrößert werden, ohne daß ein Aufschwimmen des Schleifwerkzeuges oder ein Verbrennen des Schleifgutes eintritt. Insbesondere kann gegenüber den bekannten Naßschleifverfahren der Schleifabrieb über eine Absaugvorrichtung leicht und umweltfreundlich eingesammelt und ohne Nachbearbeitung (Trocknen, Zerkleinern) in Kautschukmischungen für die Herstellung neuer Riemenrohlinge eingearbeitet werden.

Letztlich hat die deutlich verringerte Fertigungsdauer eine Reduzierung des spezifischen Energiebedarfs beim Schleifen eines Antriebsriemens von ca. 90 % zur Folge.

Zur Verdeutlichung der Erfindung ist in der Zeichnung ein Ausführungsbeispiel dargestellt.

Es zeigen:
- Fig. 1: eine schematische Seitenansicht der Gesamtvorrichtung.
- Fig. 2: eine Detailansicht eines Schleifwerkzeuges und eines auf zwei Spannwalzen gespannten Antriebsriemens.
- Fig. 3: eine teilweise geschnittene Darstellung eines Schleifwerkzeuges mit der integrierten Kühlvorrichtung.

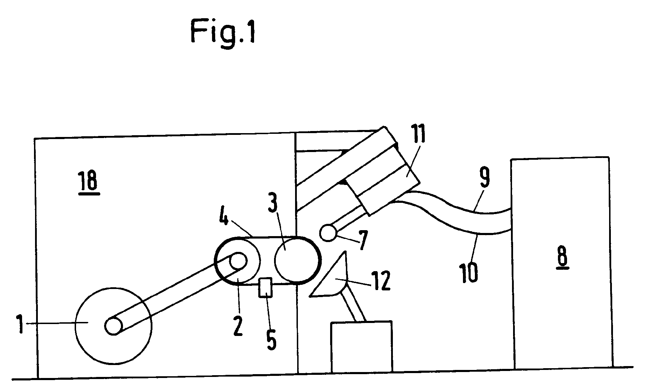

Die in Fig. 1 dargestellte Vorrichtung zur Herstellung von Antriebsriemen besteht im wesentlichen aus einem Maschinengestell 18, an dem ein Motor 1 sowie zwei verschwenkbare und von diesem Motor 1 antreibbare Walzen 2, 3 angeordnet sind. Über die Walzen 2, 3 ist der zu bearbeitende Antriebsriemen 4 gespannt, der mit Hilfe wenigstens eines Anschlages 5, 6 gegen ein seitliches Abdriften parallel zu den Achsen der Walzen 2, 3 gesichert ist.

Das Maschinengestell 18 nimmt ferner wenigstens eine Stellvorrichtung 11 für ein Schleifwerkzeug 7 auf, mit der das Schleifwerkzeug 7 an den zu bearbeitenden Riemen 4 heranführbar ist. Die Stellvorrichtung 11 ist in einer vorteilhaften Ausgestaltung der Erfindung als Spindelantrieb vorgesehen, wenngleich auch hydraulische oder pneumatische Stellantriebe die gleiche Funktion erfüllen können.

Das Schleifwerkzeug 7 ist über eine Zuleitung 9 und eine Ableitung 10 mit einer Kühleinheit 8 verbunden, die dem Schleifwerkzeug 7 ein Kühlmedium zuführt und dieses erwärmt wieder abführt. Das Kühlmedium kühlt dabei das Schleifwerkzeug 7 von innen, so daß der Schleifvorgang trocken erfolgt.

Zur Absaugung des Schleifabriebs ist eine Absaugvorrichtung 12 vorgesehen, in der dieser gesammelt und problemlos einer Weiterverarbeitung zugeführt werden kann.

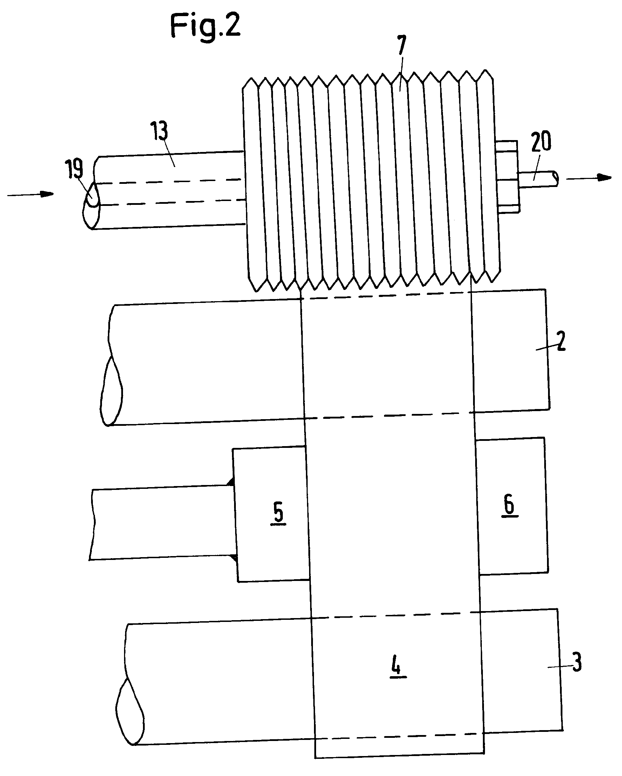

In Fig. 2 ist in schematischer Weise der Eingriff des Schleifwerkzeuges 7 in dem zu bearbeitenden Antriebsriemen 4 dargestellt. In diesem Ausführungsbeispiel verfügt die Antriebswelle 13 des Schleifwerkzeuges 7 über eine zentrale Bohrung 19, durch die das Kühlmedium dem Schleifwerkzeug 7 von innen zuführbar ist. Die Abführung des erwärmten Kühlmittels erfolgt über eine Leitung 20 am axial anderen Ende des Schleifwerkzeuges 7.

Der hier noch unbearbeitete Antriebsriemen 4 wird in Fig. 2 mit Hilfe von zwei verstellbaren Anschlägen 5, 6 gegen ein seitliches Wegdriften auf den Walzen 2, 3 fixiert, wenngleich wegen der Verschwenkbarkeit der Walzen 2, 3 in der Regel ein Anschlag 5 für diese Aufgabe ausreicht.

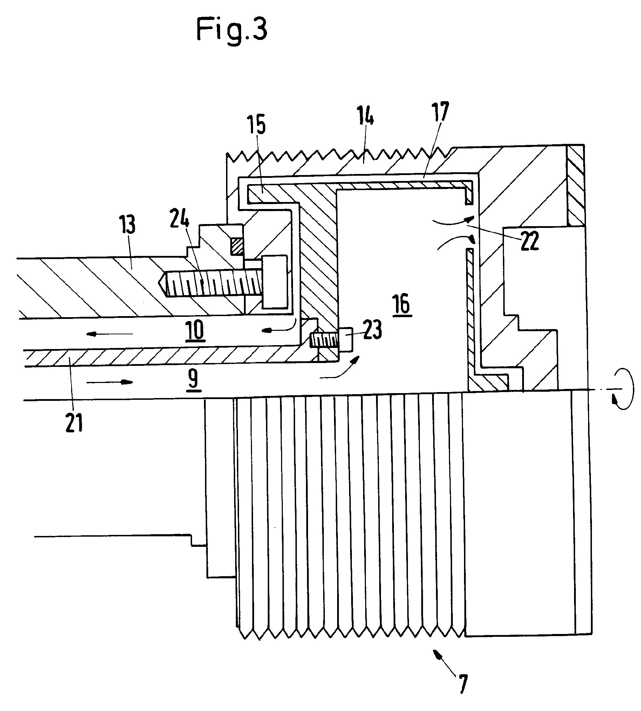

In Fig. 3 ist ein teilweise aufgeschnittenes Schleifwerkzeug 7 dargestellt, bei dem das Kühlmittel über zwei im wesentlichen axiale Leitungen 9, 10 in der Antriebswelle 13 derart geführt wird, daß die Kühlmittelzu- und -abfuhr im Bereich des antriebseitigen Endes der Antriebswelle 13 erfolgt. Die Kühlmittelzulaufleitung 9 wird dabei durch ein drehfestes Zentralrohr 21 gebildet, dessen stromabwärtiges Ende in eine Sammelkammer 16 mündet. Diese Sammelkammer 16 wird ihrerseits von einem im Schleifwerkzeug 7 befindlichen hohlen Innenzylinder 15 gebildet, der mit dem stromabwärtigen Ende des Zentralrohres 21 über Befestigungselemente 23 verbunden ist.

Dieser drehfeste Innenzylinder 15 wird mit Abstand von einem Außenzylinder 14 umgeben, der über Befestigungselemente 24 derart mit der Antriebswelle 13 verbunden ist, daß zwischen dem Innenzylinder 15 und dem Außenzylinder 14 ein Ringspalt 17 gebildet wird.

Öffnungen 22 in der Wandung des Innenzylinders 15 ermöglichen dem über die Zulaufleitung 9 in die Sammelkammer 16 gelangten Kühlmittel einen Übertritt in den Ringkanal 17 und von diesem in die Rücklaufleitung 10, die durch die Außenwand des Zentralrohres 21 und der Innenwand der hohlen Antriebswelle 13 gebildet wird.

Der das Schleifmittel tragende profilierte Außenzylinder 14 ist im Bereich des Ringkanals 17 von nur geringer Wanddicke (ca. 5 mm), so daß bei metallischer Bauweise sehr gute Wärmeübertragungseigenschaften vom Schleifprozeß zur Kühlflüssigkeit festzustellen sind. Eine starke Unterkühlung auf bis zu ca. 5° C des Schleifwerkzeuges 7 ermöglicht so eine erhebliche Erhöhung der Abtragsleistung bei einem umweltgerechten Trockenschleifvorgang.

In einer weiteren Ausführungsform weist der Innen- oder Außenzylinder 15, 14 in den Ringspalt 17 hineinragende, zur Drehachse auf deren Außenseite bzw. Innenseite zur Drehachse der Welle 13 parallele kanalbildende Stege auf. Außerdem ist eine andere Variante denkbar, bei der zusätzlich zum Ringspalt 17 oder den achsparallelen Kanälen im Außenzylinder 14 achsparallele Bohrungen vorgesehen sind, durch die ebenfalls Kühlflüssigkeit leitbar ist. Mit dieser Maßnahme wird die Wärmeübertragungsfläche weiter erhöht und die Kühlfähigkeit der erfindungsgemäßen Vorrichtung verbessert.

### Bezugszeichenliste:

- 1: = Motor
- 2: = Walze
- 3: = Walze
- 4: = Antriebsriemen
- 5: = Anschlag
- 6: = Anschlag
- 7: = Schleifwerkzeug
- 8: = Kühleinheit
- 9: = Zulaufleitung
- 10: = Rücklaufleitung
- 11: = Stellvorrichtung
- 12: = Absaugvorrichtung
- 13: = Antriebswelle des Schleifwerkzeuges
- 14: = Außenzylinder
- 15: = Innenzylinder
- 16: = Sammelkammer
- 17: = Ringspalt
- 18: = Maschinengestell
- 19: = Bohrung
- 20: = Leitung
- 21: = Zentralrohr
- 22: = Öffnung
- 23: = Befestigungselement
- 24: = Befestigungselement

## Patentansprüche

1. Vorrichtung zur Herstellung von Antriebsriemen, umfassend eine antreibbare Aufspannvorrichtung für einen armierten und vulkanisierten Riemenrohling, wenigstens ein Formschleifwerkzeug, eine Auffangvorrichtung für den Riemenabrieb, sowie eine Kühlvorrichtung für den Schleifvorgang,
**dadurch gekennzeichnet,**
daß die Aufspannvorrichtung aus zwei gegeneinander verschwenkbaren Walzen (2, 3) besteht, an die wenigstens ein den Riemen (4) seitlich fixierender Anschlag (5, 6) heranragt,
daß in das Formschleifwerkzeug (7) eine Flüssigkeitskühlvorrichtung integriert ist, mit der ein trockener Schleifvorgang durchführbar ist, wobei die Flüssigkeitsvorrichtung als Ringspalt (17) zwischen einem das Schleifmittel tragenden, antriebbaren Außenzylinder (14) und einem ortsfesten Innenzylinder (15) ausgebildet ist.

2. Vorrichtung nach Anspruch 1,
**dadurch gekennzeichnet,**
daß der Innenzylinder (15) bzw. der Außenzylinder (14) in den Ringspalt (17) hineinragende, zur Welle (13) achsparallele und kühlkanalbildende Stege aufweist.

3. Vorrichtung nach einem der vorherigen Ansprüche,
**dadurch gekennzeichnet,**
daß im Außenzylinder (14) zur Welle (13) achsparallele Kühlmittelbohrungen vorgesehen sind.

## Claims

1. An apparatus for producing driving belts comprising a driveable clamping unit for a reinforced and vulcanized semifinished belt, at least one shaping grinding tool, one collecting device for the grinding dust, as well as one cooling unit for the grinding process,
**characterized in that**
the clamping unit consists of two rolls (2, 3) that can be swivelled one against the other with at least one stop (5, 6) that extends towards these rolls and laterally fixes the belt (4),
the shaping grinding tool (7) is provided with an integrated liquid cooling device suitable for carrying out a dry grinding process, with the liquid cooling device being designed as an annular gap (17) between a driveable external cylinder (14) that supports the abrasive and a stationary internal cylinder (15).

2. An apparatus according to claim 1
**characterized in that**
the internal cylinder (15) and/or the external cylinder (14) present flights that project into the annular gap (17 and are arranged in parallel to the axis of the shaft (13), thus forming cooling channels.

3. An apparatus according to one of the claims mentioned above
**characterized in that**
the external cylinder (14) presents bores for the cooling medium that are arranged in parallel to the shaft (13).

## Revendications

1. Appareil pour la production de courroies de transmission comprenant un dispositif tendeur qui peut être entraîné pour une ébauche de courroie renforcée et vulcanisée, au moins un outil de meulage, un dispositif collecteur pour la poussière de meulage ainsi qu'un dispositif de refroidissement pour le procédé de meulage,
**caractérisé**
en ce que le dispositif tendeur comprend deux rouleaux (2, 3) pivotables l'un par rapport à l'autre et au moins une butée (5, 6 ) fixant latéralement la courroie (4) qui touche presque les rouleaux (2, 3), en ce que l'outil de meulage (7) comprend un dispositif de refroidissement à liquide permettant un procédé de meulage à sec, le dispositif de refroidissement à liquide étant formé par une fente annulaire (17) entre un cylindre extérieur qui porte l'agent de meulage et qui peut être entraîné, et un cylindre intérieur stationnaire (15).

2. Appareil selon revendication 1,
**caractérisé**
en ce que le cylindre intérieur (15) ou bien le cylindre extérieur (14) présente des filets en parallèle avec l'axe pénétrant dans la fente annulaire (17) et formant des canaux de refroidissement.

3. Appareil selon une des revendications précédentes,
**caractérisé**
en ce que le cylindre extérieur (14) est pourvu d'alésages pour l'agent de refroidissement en parallèle avec l'arbre (13).
